# EUROPEAN PATENT SPECIFICATION

(11) **EP 1 514 174 B1**
(45) Date of publication and mention of the grant of the patent: **09.11.2005**
(21) Application number: 03732892.9
(22) Date of filing: 04.06.2003
(51) Int. Cl.: G06F 7/72

(54) **AES MIXCOLUMN TRANSFORM**
AES MIXCOLUMN TRANSFORMATION
TRANSFORMATION DE MIXCOLUMN DEPLOYEE DANS LE STANDARD DE CHIFFREMENT AVANCE (AES)

(30) Priority: 07.06.2002 GB 0213242
(43) Date of publication of application: 16.03.2005
(73) Proprietor: Koninklijke Philips Electronics N.V., 5621 BA Eindhoven (NL)
(72) Inventor: HUBERT, Gerardus T.M., Cross Oak Lane, Redhill, Surrey RH1 5HA (GB)
(74) Representative: White, Andrew Gordon
(86) International application number: PCT/IB2003/002583
(87) International publication number: WO 2003/104973

(56) References cited:
- MCLOONE M ET AL: "High performance single-chip FPGA Rijndael algorithm implementations" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN: SPRINGER, DE, vol. 2162, 14 May 2001 (2001-05-14), pages 65-76, XP002203795 ISBN: 3-540-42521-7
- STALLINGS W: "THE ADVANCED ENCRYPTION STANDARD" CRYPTOLOGIA, UNITED STATES MILITARY ACADEMY, WEST POINT, NY, US, vol. 26, no. 3, July 2001 (2001-07), pages 165-188, XP001094868 ISSN: 0161-1194

## Description

The present invention relates to methods and apparatus for implementation of the Advanced Encryption Standard (AES) algorithm and in particular to methods and apparatus for performing the matrix multiplication operation that constitutes the AES MixColumn transformation in each of the encryption and decryption rounds of the algorithm..

The invention has particular, though not exclusive, application in cryptographic devices such as those installed in smart cards and other devices

where processor and memory resources are somewhat limited and many operations of the cryptographic algorithm are performed in dedicated ASIC or FPGA hardware.

The AES algorithm has wide application in the encryption of data to be transmitted in a secure fashion. One application is in the transmittal of personal and/or financial information from a smartcard to a card reader device. Confidential data stored on the card must not be retrieved from the card except in encrypted form to ensure that the data so retrieved cannot be intercepted and read by an unauthorised third party. Only the authorised reader is able to decrypt the data retrieved from the card.

Similarly, data supplied by the card reader to be stored in the card must be passed to the card in encrypted form, and decrypted by the card for storage and subsequent retrieval.

While the AES algorithm is relatively straightforward to implement in a conventional computer system deploying state of the art processor and memory circuits, in a smartcard application, the processor and memory resource is very limited, and many functions must be executed in dedicated hardware, such as ASICs or FPGAs.

An example of a conventional hardware implementation of the AES algorithm can be found in "High Performance Single-Chip FPGA Rijndael Algorithm Implementations", Maire McLoone and J.V. McCanny. Cryptographic Hardware And Embedded Systems. 3rd International Workshop, Ches 2001, Paris, France, May 14 - 16, 2001 Proceedings, Lecture Notes In Computer Science, Berlin: Springer, De (14-05-2001), 2162, 65-76.

There is therefore a requirement for hardware implementations of the procedures required in the AES algorithm which implementations require the minimum use of hardware resource.

It is an object of the present invention to provide suitable circuitry for effecting the MixColumn transform deployed in the standard AES (Rijndael) cryptographic algorithm, both for encryption and decryption.

According to one aspect, the present invention provides a logic circuit for multiplication of an (m × n) matrix by a (1 × n) or by a (m × 1) matrix, where m is a number of rows and n is a number of columns, and wherein each successive row m, of n elements is a predetermined row permutation of a preceding row, the circuit comprising:
n multiplication circuits each having an input and an output which returns the value of said input multiplied by a predetermined multiplicand;
n logic circuits, each for executing a predetermined logical combination of a first input and a second input to provide a logical output, the first input being coupled to the output of a corresponding one of the n multiplication circuits;
n registers for receiving said logical output;
feedback logic for routing the contents of each register to a selected one of the second inputs in accordance with a feedback plan that corresponds to the predetermined row permutation; and
control means for successively providing as input to each of the n multiplication circuits each element in the (1 × n) or (m × 1) matrix.

Embodiments of the present invention will now be described by way of example and with reference to the accompanying drawings in which:
Figure 1 is a flow diagram illustrating implementation of an encryption operation using the AES block cipher algorithm; and
Figure 2 is a schematic diagram of a functional logic block for performing the MixColumns transform.

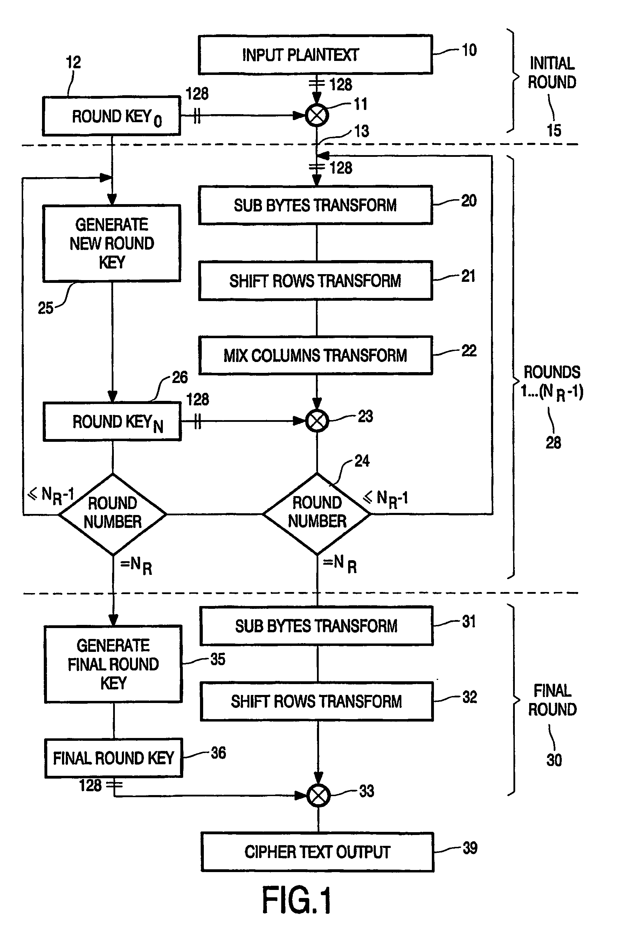

The AES algorithm for encryption of plaintext to ciphertext is shown in figure 1. The AES algorithm may be implemented using a 128-bit, a 192-bit or a 256-bit key operating on successive 128-bit blocks of input data. The present invention is applicable to all of these implementations. Figure 1 will now be described in the context of the basic implementation using a 128-bit key.

An initial 128-bit block of input plaintext 10 is XOR-combined 11 with an original 128-bit key 12 in an initial round 15. The output 13 from this initial round 15 is then passed through a number of repeated transform stages, in an encryption round 28 which includes the SubBytes transform 20, the ShiftRows transform 21 and the MixColumns transform 22 in accordance with the defined AES algorithm.

The output from the MixColumns transform 22 is XOR-combined 23 with a new 128-bit round key 26, which has been derived 25 from the initial (original) key 12. The output from this XOR-combination 23 is fed back to pass through the encryption round 28 a further number of times, the number depending upon the particular implementation of the algorithm.

For each successive iteration through the encryption round 28, a new round key 26' is derived from the existing round key 26 according to the AES round key schedule.

The number of iterations (Nr - 1) of the encryption round 28 is nine where a 128-bit encryption key is being used, eleven where a 192-bit encryption key is being used, and thirteen where a 256-bit encryption key is being used.

After the requisite number (Nr - 1) of encryption rounds 28, a final round, Nr, is entered under the control of decision box 24. The final round 30 comprises a further SubBytes transform 31, a further ShiftRows transform 32, and a subsequent XOR-combination 33 of the result with a final round key 36 generated 35 from the previous round key. The output therefrom comprises the ciphertext output 39 of the encryption algorithm.

The present invention relates particularly to the performing of the MixColumns transform 22. Through the rounds 28, 30, the 128-bit blocks being processed are conveniently represented as 16 8-bit blocks in a 4 × 4 matrix, as s_{row, column}, according to the pattern,

| | | | |
|---|---|---|---|
| s_{0,0} | s_{0,1} | s_{0,2} | s_{0,3} |
| s_{1,0} | s_{1,1} | s_{1,2} | s_{1,3} |
| s_{2,0} | s_{2,1} | s_{2,2} | s_{2,3} |
| s_{3,0} | s_{3,1} | s_{3,2} | s_{3,3} |

In the MixColumns transform 22, the columns of this state are considered as polynomials over GF(2⁸) and multiplied modulo (x⁴ + 1) with a predetermined fixed polynomial a(x), given by:${\text{a(x) = a}}_{\text{3}} {\text{x}}^{\text{3}} {\text{+ a}}_{\text{2}} {\text{x}}^{\text{2}} {\text{+ a}}_{\text{1}} {\text{x + a}}_{\text{0}} \text{,}$ in which, represented as hexadecimal values,${\text{a}}_{\text{3}} \text{= 03 h}$${\text{a}}_{\text{2}} \text{= 01 h}$${\text{a}}_{\text{1}} \text{= 01 h}$${\text{a}}_{\text{0}} \text{= 02 h.}$

The polynomial is co-prime to x⁴ + 1 and is therefore invertible.

For encryption, the MixColumns transform can therefore be expressed as
s_{r,c} → s'_{r,c}, for each of the columns in s.

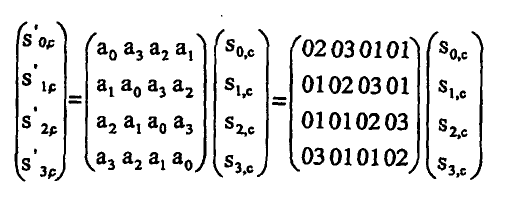

The evaluation of this matrix multiplication is:${\text{s'}}_{\text{0,c}} {\text{= {02}*s}}_{\text{0,c}} {\text{⊕ {03}*s}}_{\text{1,c}} {\text{⊕ s}}_{\text{2,c}} {\text{⊕ s}}_{\text{3,c}}$${\text{s'}}_{\text{1,c}} {\text{= s}}_{\text{0,c}} {\text{⊕ {02}*s}}_{\text{1,c}} {\text{⊕ {03}* s}}_{\text{2,c}} {\text{⊕ s}}_{\text{3,c}}$${\text{s'}}_{\text{2,c}} {\text{= s}}_{\text{0,c}} {\text{⊕ s}}_{\text{1,c}} {\text{⊕ {02}* s}}_{\text{2,c}} {\text{⊕ {03} s}}_{\text{3,c}}$${\text{s'}}_{\text{3,c}} {\text{= {03}*s}}_{\text{0,c}} {\text{⊕ s}}_{\text{1,c}} {\text{⊕ s}}_{\text{2,c}} {\text{⊕ {02}*s}}_{\text{3,c}}$

During decryption, the inverse of this operation is required. It is given by the following matrix multiplication.

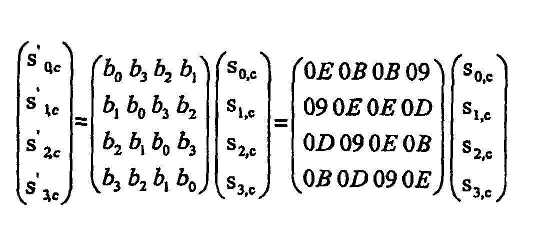

The evaluation of this matrix multiplication is:${\text{s'}}_{\text{0,c}} {\text{= {0E}*s}}_{\text{0,c}} {\text{⊕ {0B}*s}}_{\text{1,c}} {\text{⊕ {0D)*s}}_{\text{2,c}} {\text{⊕ {09}*s}}_{\text{3,c}}$${\text{s'}}_{\text{1,c}} {\text{= {09}*s}}_{\text{0,c}} {\text{⊕ {0E}*s}}_{\text{1,c}} {\text{⊕ {0B)*s}}_{\text{2,c}} {\text{⊕ {0D}*s}}_{\text{3,c}}$${\text{s'}}_{\text{2,c}} {\text{= {0D}*s}}_{\text{0,c}} {\text{⊕ {09}*s}}_{\text{1,c}} {\text{⊕ {0E}*s}}_{\text{2,c}} {\text{⊕ {0B}*s}}_{\text{3,c}}$${\text{s'}}_{\text{3,c}} {\text{= {0B}*s}}_{\text{0,c}} {\text{⊕ {0D}*s}}_{\text{1,c}} {\text{⊕ {09}*s}}_{\text{2,c}} {\text{⊕ {0E}*s}}_{\text{3,c}}$

It is noted that the MixColumns transform matrix has the special property that each successive row is a shifted or rotated version of the preceding row. In general, each element in a row appears in every row but in a different position in the row, and specifically, for the MixColumns transform matrix the different position of each element for each row constitutes a single position right shift or rotation.

According to the present invention, it has been recognised that this property allows the multiplication of each column of the state s to be achieved with significantly reduced hardware.

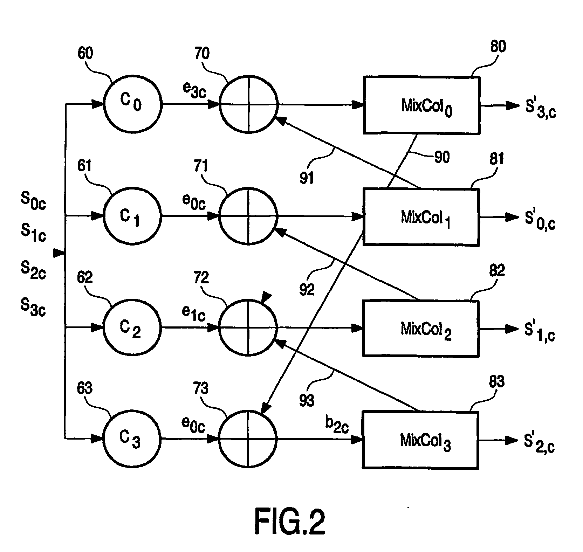

Figure 2 illustrates an exemplary embodiment of hardware logic 50 adapted for the multiplication of an m × n matrix by a 1 × n matrix, in which the relationship between each successive row of n elements of the m × n matrix is a predetermined row shift. For the AES MixColumns transform, m = 4, n = 4 and the predetermined relationship is a single right shift.

The logic 50 comprises four 8-bit multiplication circuits 60 ... 63, four 8-bit XOR gates 70 ... 73 and four feedback / output registers 80 ... 83, shown as MixCol₀ ... MixCol₃. Each multiplication circuit 70 ... 73 is adapted for multiplication of an input by one of the matrix coefficients c₀, c₁, c₂, c₃. Each of the XOR gates 70 ... 73 may be implemented using any appropriate combination of logic elements required to execute the appropriate logical combination of two inputs, as described hereinafter.

For encryption rounds, the values of c₀ ... c₃ are, respectively, a₀ ... a₃ as defined above. For decryption rounds, the values of c₀ ... c₃ are, respectively, b₀ ... b₃ as defined above. The output of each multiplication circuit 60 ... 63 is coupled to a first input of a corresponding XOR gate 70 ... 73. The output of each XOR gate 70 ... 73 is coupled to a corresponding MixCol register 80 ... 83. The output of each MixCol register 80 ... 83 is coupled to the second input of one of the XOR gates 70 ... 73 according to a feedback plan 90 ... 93 that corresponds to the row shift function that defines the relationship between successive rows of the matrix. In the present case, the feedback plan 90 ... 93 implements the right row shift function between successive rows of the matrices a_{r,c} (encryption) and b_{r,c} (decryption) - more generally the matrix c_{r,c}.

During operation of the circuit 50, s_{0c}, s_{1c}, s_{2c}, s_{3c} are sequentially offered to the multiplication logic 60 ... 63 on successive cycles. At the outset of each column multiplication, the registers MixCol₀ to MixCol₃ are pre-set to zero.
*After the 1*^{*st*} *cycle:*${\text{MixCol}}_{\text{0}} {\text{= c}}_{\text{0}} {\text{.s}}_{\text{0c}}$${\text{MixCol}}_{\text{1}} {\text{= c}}_{\text{1}} {\text{.s}}_{\text{0c}}$${\text{MixCol}}_{\text{2}} {\text{= c}}_{\text{2}} {\text{.s}}_{\text{0c}}$${\text{MixCol}}_{\text{3}} {\text{= c}}_{\text{3}} {\text{.s}}_{\text{0c}}$
*After the 2*^{*nd*} *cycle:*${\text{MixCol}}_{\text{0}} {\text{= c}}_{\text{0}} {\text{.s}}_{\text{1c}} {\text{⊕ c}}_{\text{1}} {\text{.s}}_{\text{0c}}$${\text{MixCol}}_{\text{1}} {\text{= c}}_{\text{1}} {\text{.s}}_{\text{1c}} {\text{⊕ c}}_{\text{2}} {\text{.s}}_{\text{0c}}$${\text{MixCol}}_{\text{2}} {\text{= c}}_{\text{2}} {\text{.s}}_{\text{1c}} {\text{⊕ c}}_{\text{3}} {\text{.s}}_{\text{0c}}$${\text{MixCol}}_{\text{3}} {\text{= c}}_{\text{3}} {\text{.s}}_{\text{1c}} {\text{⊕ c}}_{\text{0}} {\text{.s}}_{\text{0c}}$
*After the 3*^{*rd*} *cycle:*${\text{MixCol}}_{\text{0}} {\text{= c}}_{\text{0}} {\text{.s}}_{\text{2c}} {\text{⊕ c}}_{\text{1}} {\text{.s}}_{\text{1c}} {\text{⊕ c}}_{\text{2}} {\text{.s}}_{\text{0c}}$${\text{MixCol}}_{\text{1}} {\text{= c}}_{\text{1}} {\text{.s}}_{\text{2c}} {\text{⊕ c}}_{\text{2}} {\text{.s}}_{\text{1c}} {\text{⊕ c}}_{\text{3}} {\text{.s}}_{\text{0c}}$${\text{MixCol}}_{\text{2}} {\text{= c}}_{\text{2}} {\text{.s}}_{\text{2c}} {\text{⊕ c}}_{\text{3}} {\text{.s}}_{\text{1c}} {\text{⊕ c}}_{\text{0}} {\text{.s}}_{\text{0c}}$${\text{MixCol}}_{\text{3}} {\text{= c}}_{\text{3}} {\text{.s}}_{\text{2c}} {\text{⊕ c}}_{\text{0}} {\text{.s}}_{\text{1c}} {\text{⊕ c}}_{\text{1}} {\text{.s}}_{\text{0c}}$
*After the 4*^{*th*} *cycle:*${\text{MixCol}}_{\text{0}} {\text{= c}}_{\text{0}} {\text{.s}}_{\text{3c}} {\text{⊕ c}}_{\text{1}} {\text{.s}}_{\text{2c}} {\text{⊕ c}}_{\text{2}} {\text{.s}}_{\text{1c}} {\text{⊕ c}}_{\text{3}} {\text{.s}}_{\text{0c}}$${\text{MixCol}}_{\text{1}} {\text{= c}}_{\text{1}} {\text{.s}}_{\text{3c}} {\text{⊕ c}}_{\text{2}} {\text{.s}}_{\text{2c}} {\text{⊕ c}}_{\text{3}} {\text{.s}}_{\text{1c}} {\text{⊕ c}}_{\text{0}} {\text{.s}}_{\text{0c}}$${\text{MixCol}}_{\text{2}} {\text{= c}}_{\text{2}} {\text{.s}}_{\text{3c}} {\text{⊕ c}}_{\text{3}} {\text{.s}}_{\text{2c}} {\text{⊕ c}}_{\text{0}} {\text{.s}}_{\text{1c}} {\text{⊕ c}}_{\text{1}} {\text{.s}}_{\text{0c}}$${\text{MixCol}}_{\text{3}} {\text{= c}}_{\text{3}} {\text{.s}}_{\text{3c}} {\text{⊕ c}}_{\text{0}} {\text{.s}}_{\text{2c}} {\text{⊕ c}}_{\text{1}} {\text{.s}}_{\text{1c}} {\text{⊕ c}}_{\text{2}} {\text{.s}}_{\text{0c}}$

Rearranging these outputs, according to the feedback plan 90 ... 93 gives the outputs:${\text{MixCol}}_{\text{1}} {\text{= s'}}_{\text{0,c}}$${\text{MixCol}}_{\text{2}} {\text{= s'}}_{\text{1,c}}$${\text{MixCol}}_{\text{3}} {\text{= s'}}_{\text{2,c}}$${\text{MixCol}}_{\text{0}} {\text{= s'}}_{\text{0,c}}$ which is the required result.

It will be noted that, generally speaking, the number of rows, m, in the matrix determines the number of cycles required, while the number of columns, n, determines the number of logic groups (multipliers 60 ... 63, XOR gates 70 ... 73, and registers 80 ... 83) required.

The multiplication logic 60 ... 63 can be implemented using any suitable logic. In a preferred embodiment, the logic is provided for both encryption and decryption combining certain logic according to the following schedule.

For c₀ × s_{0,c}, there the output from the respective multiplication logic 60 ... 63 is defined as e_{cycle, bit}, and d = 0 for encryption and d = 1 for decryption:${\text{e}}_{\text{07}} {\text{= s}}_{\text{6}} {\text{XNOR NAND(d, s}}_{\text{45}} \text{)}$${\text{e}}_{\text{06}} {\text{= s}}_{\text{5}} {\text{XNOR NAND(d, s}}_{\text{347}} \text{)}$${\text{e}}_{\text{05}} {\text{= s}}_{\text{4}} {\text{XNOR NAND(d, s}}_{\text{236}} \text{)}$${\text{e}}_{\text{04}} {\text{= s}}_{\text{37}} {\text{XNOR NAND(d, s}}_{\text{125}} \text{)}$${\text{e}}_{\text{03}} {\text{= s}}_{\text{27}} {\text{XNOR NAND(d, s}}_{\text{0157}} \text{)}$${\text{e}}_{\text{02}} {\text{= s}}_{\text{17}} {\text{XNOR NAND(d, s}}_{\text{0567}} \text{)}$${\text{e}}_{\text{01}} {\text{= s}}_{\text{0}} {\text{XNOR NAND(d, s}}_{\text{67}} \text{)}$${\text{e}}_{\text{01}} {\text{= s}}_{\text{7}} {\text{XNOR NAND(d, s}}_{\text{56}} \text{)}$

Similarly, for c₁ x s_{1,c}:${\text{e}}_{\text{17}} {\text{= s}}_{\text{7}} {\text{XNOR NAND(d, s}}_{\text{4}} \text{)}$${\text{e}}_{\text{16}} {\text{= s}}_{\text{6}} {\text{XNOR NAND(d, s}}_{\text{37}} \text{)}$${\text{e}}_{\text{15}} {\text{= s}}_{\text{5}} {\text{XNOR NAND(d, s}}_{\text{267}} \text{)}$${\text{e}}_{\text{14}} {\text{= s}}_{\text{4}} {\text{XNOR NAND(d, s}}_{\text{1567}} \text{)}$${\text{e}}_{\text{13}} {\text{= s}}_{\text{3}} {\text{XNOR NAND(d, s}}_{\text{056}} \text{)}$${\text{e}}_{\text{12}} {\text{= s}}_{\text{2}} {\text{XNOR NAND(d, s}}_{\text{57}} \text{)}$${\text{e}}_{\text{11}} {\text{= s}}_{\text{1}} {\text{XNOR NAND(d, s}}_{\text{6}} \text{)}$${\text{e}}_{\text{10}} {\text{= s}}_{\text{0}} {\text{XNOR NAND(d, s}}_{\text{5}} \text{)}$

Similarly, for c₂ × s_{2,c}:${\text{e}}_{\text{27}} {\text{= s}}_{\text{7}} {\text{XNOR NAND(d, s}}_{\text{45}} \text{)}$${\text{e}}_{\text{26}} {\text{= s}}_{\text{6}} {\text{XNOR NAND(d, s}}_{\text{347}} \text{)}$${\text{e}}_{\text{25}} {\text{= s}}_{\text{5}} {\text{XNOR NAND(d, s}}_{\text{236}} \text{)}$${\text{e}}_{\text{24}} {\text{= s}}_{\text{4}} {\text{XNOR NAND(d, s}}_{\text{125}} \text{)}$${\text{e}}_{\text{23}} {\text{= s}}_{\text{3}} {\text{XNOR NAND(d, s}}_{\text{015}} \text{)}$${\text{e}}_{\text{22}} {\text{= s}}_{\text{2}} {\text{XNOR NAND(d, s}}_{\text{0567}} \text{)}$${\text{e}}_{\text{21}} {\text{= s}}_{\text{1}} {\text{XNOR NAND(d, s}}_{\text{67}} \text{)}$${\text{e}}_{\text{20}} {\text{= s}}_{\text{0}} {\text{XNOR NAND(D, s}}_{\text{56}} \text{)}$

Similarly, for c₃ × s_{3,c}:${\text{e}}_{\text{37}} {\text{= s}}_{\text{67}} {\text{XNOR NAND(d, s}}_{\text{4}} \text{)}$${\text{e}}_{\text{36}} {\text{= s}}_{\text{56}} {\text{XNOR NAND(d, s}}_{\text{37}} \text{)}$${\text{e}}_{\text{35}} {\text{= s}}_{\text{45}} {\text{XNOR NAND(d, s}}_{\text{267}} \text{)}$${\text{e}}_{\text{34}} {\text{= s}}_{\text{347}} {\text{XNOR NAND(d, s}}_{\text{1567}} \text{)}$${\text{e}}_{\text{33}} {\text{= s}}_{\text{23}} {\text{XOR s}}_{\text{7}} {\text{XNOR NAND(d, s}}_{\text{056}} \text{)}$${\text{e}}_{\text{32}} {\text{= s}}_{\text{12}} {\text{XOR s}}_{\text{7}} {\text{XNOR NAND(d, s}}_{\text{57}} \text{)}$${\text{e}}_{\text{31}} {\text{= s}}_{\text{01}} {\text{XNOR NAND(d, s}}_{\text{6}} \text{)}$${\text{e}}_{\text{30}} {\text{= s}}_{\text{07}} {\text{XNOR NAND(d, s}}_{\text{5}} \text{)}$ where:${\text{a}}_{\text{57}} {\text{= a}}_{\text{5}} {\text{XOR a}}_{\text{7}}$${\text{a}}_{\text{07}} {\text{= a}}_{\text{0}} {\text{XOR a}}_{\text{7}}$${\text{a}}_{\text{34}} {\text{= a}}_{\text{3}} {\text{XOR a}}_{\text{4}}$${\text{a}}_{\text{567}} {\text{= a}}_{\text{7}} {\text{XOR a}}_{\text{56}}$${\text{a}}_{\text{125}} {\text{= a}}_{\text{12}} {\text{XOR a}}_{\text{5}}$${\text{a}}_{\text{1567}} {\text{= a}}_{\text{17}} {\text{XOR a}}_{\text{56}}$${\text{a}}_{\text{37}} {\text{= a}}_{\text{3}} {\text{XOR a}}_{\text{7}}$${\text{a}}_{\text{67}} {\text{= a}}_{\text{6}} {\text{XOR a}}_{\text{7}}$${\text{a}}_{\text{23}} {\text{= a}}_{\text{2}} {\text{XOR a}}_{\text{3}}$${\text{a}}_{\text{056}} {\text{= a}}_{\text{0}} {\text{XOR a}}_{\text{56}}$${\text{a}}_{\text{267}} {\text{= a}}_{\text{2}} {\text{XOR a}}_{\text{67}}$${\text{a}}_{\text{27}} {\text{= a}}_{\text{2}} {\text{XOR a}}_{\text{7}}$${\text{a}}_{\text{56}} {\text{= a}}_{\text{5}} {\text{XOR a}}_{\text{6}}$${\text{a}}_{\text{12}} {\text{= a}}_{\text{1}} {\text{XOR a}}_{\text{2}}$${\text{a}}_{\text{347}} {\text{= a}}_{\text{34}} {\text{XOR a}}_{\text{7}}$${\text{a}}_{\text{0157}} {\text{= a}}_{\text{01}} {\text{XOR a}}_{\text{57}}$${\text{a}}_{\text{17}} {\text{= a}}_{\text{1}} {\text{XOR a}}_{\text{7}}$${\text{a}}_{\text{45}} {\text{= a}}_{\text{4}} {\text{XOR a}}_{\text{5}}$${\text{a}}_{\text{01}} {\text{= a}}_{\text{0}} {\text{XOR a}}_{\text{1}}$${\text{a}}_{\text{236}} {\text{= a}}_{\text{23}} {\text{XOR a}}_{\text{6}}$${\text{a}}_{\text{0567}} {\text{= a}}_{\text{07}} {\text{XOR a}}_{\text{56}}$

This requires 23 XOR gates, 32 XNOR gates and 32 NAND gates.

Other embodiments are intentionally within the scope of the accompanying claims.

## Claims

1. A logic circuit for multiplication of an (m × n) matrix by a (1 × n) or by a (m × 1) matrix, where m is a number of rows and n is a number of columns, and wherein each successive row m of n elements is a predetermined row permutation of a preceding row, the circuit **characterised in** comprising:
n multiplication circuits (60...63) each having an input and an output which returns the value of said input multiplied by a predetermined multiplicand;
n logic circuits, (70...73) each for executing a predetermined logical combination of a first input and a second input to provide a logical output, the first input being coupled to the output of a corresponding one of the n multiplication circuits;
n registers (80...83) for receiving said logical output;
feedback logic for routing the contents of each register to a selected one of the second inputs in accordance with a feedback plan that corresponds to the predetermined row permutation; and
control means for successively providing as input to each of the n multiplication circuits each element in the (1 × n) or (m × 1) matrix.

2. The logic circuit of claim 1 in which the feedback logic provides a feedback plan corresponding to said predetermined row permutation that is a row shift.

3. The logic circuit of claim 2 in which the row shift is a single element right shift.

4. The logic circuit of claim 1 in which the n logic circuits are each adapted to execute an XOR-combination of said first input and said second input.

5. The logic circuit of claim 1 in which each of the predetermined multiplicands corresponds to one of the elements in the AES Rijndael MixColumns transform function.

6. The logic circuit of claim 5 in which the number m = 4, the number n = 4, the multiplicand for the first multiplication circuit = 02, the multiplicand for the second multiplication circuit = 03, the multiplicand for the third multiplication circuit = 01, and the multiplicand for the fourth multiplication circuit = 01.

7. The logic circuit of claim 5 in which the number m = 4, the number n = 4, the multiplicand for the first multiplication circuit = 0E, the multiplicand for the second multiplication circuit = 0B, the multiplicand for the third multiplication circuit = 0D, and the multiplicand for the fourth multiplication circuit = 09.

8. The logic circuit of claim 6 or claim 7 in which the four multiplicands are switchable between the values in claim 6 and the values in claim 7.

9. The logic circuit of claim 1 in which the control means is adapted to successively provide as input to each of the n multiplication circuits each successive element in the (1 × n) or (m × 1) matrix over each of n or m cycles of operation respectively.

10. The logic circuit of claim 1 in which each of the n multiplication circuits, each of the n logic circuits, and each of the n registers are at least eight bits wide.

11. The logic circuit of claim 1 in which the control means further includes means for providing as output from said logic circuit the contents of the n registers after each *n*th cycle.

12. The logic circuit of claim 1 in which the control means further includes means for resetting each of the registers prior to the first calculation cycle.

13. The logic circuit of claim 1 in which each successive row m of n elements is a predetermined row permutation of the immediately preceding row.

14. An AES MixColumns transform circuit incorporating the logic circuit of any one of claims 1 to 13.

15. An AES encryption and/or decryption engine incorporating the logic circuit of any one of claims 1 to 13 for performing the MixColumns transform.

## Patentansprüche

1. Logische Schaltung zum Multiplizieren einer (m x n) Matrix mit einer (1 x n) oder mit einer (m x 1) Matrix, wobei m eine Anzahl Reihen und n eine Anzahl Spalten ist, und wobei jede nachfolgende Reihe m mit n Elementen eine vorbestimmte Reihenpermutation einer vorhergehenden Reihe ist, wobei die Schaltungsanordnung **dadurch gekennzeichnet ist, dass** sie Folgendes umfasst:
- n Multiplikationsschaltungen (60...63), die je einen Eingang und einen Ausgang haben, der den Wert des genannten Eingangs multipliziert mit einem vorbestimmten Multiplikanden zurückführt;
- n logische Schaltungen (70...73) je zum Durchführen einer vorbestimmten logischen Kombination eines ersten Eingangs und eines zweiten Eingangs zum Liefern eines logischen Ausgangs, wobei der erste Eingang mit dem Ausgang einer entsprechenden Schaltungsanordnung der n Multiplikationsschaltungen gekoppelt ist;
- n Register (80...83) zum Empfangen des genannten logischen Ausgangs,
- Rückkopplungslogik zum Trassieren des Inhalts jedes Registers zu einem selektierten Eingang der zweiten Eingänge entsprechend einem Rückkopplungsplan, der mit der vorbestimmten Reihenpermutation übereinstimmt; und
- Steuermittel zum aufeinander folgenden Liefern jedes Elementes in der (1 x n) oder (m x 1) Matrix als Eingang zu jeder der n Multiplikationsschaltungen.

2. Logische Schaltung nach Anspruch 1, wobei die Rückkopplungslogik einen Rückkopplungsplan entsprechend der genannten vorbestimmten Reihenpermutation schafft, der eine Reihenverschiebung ist.

3. Logische Schaltung nach Anspruch 2, wobei die Reihenverschiebung eine Verschiebung um ein einziges Element nach rechts ist.

4. Logische Schaltung nach Anspruch 1, wobei die n logischen Schaltungen je dazu vorgesehen sind, eine XOR-Kombination des genannten ersten Eingangs und des genannten zweiten Eingangs durchzuführen.

5. Logische Schaltung nach Anspruch 1, wobei jeder der vorbestimmten Multiplikanden mit einem der Elemente in der AES Rijndael MixColumns Transformationsfunktion übereinstimmt,

6. Logische Schaltung nach Anspruch 5, wobei die Zahl m = 4, die Zahl n = 4 ist, der Multiplikand für die erste Multiplikationsschaltung = 02, der Multiplikand für die zweite Multiplikationsschaltung = 03, der Multiplikand für die dritte Multiplikationsschaltung = 01, und der Multiplikand für die vierte Multiplikationsschaltung =01 ist.

7. Logische Schaltung nach Anspruch 5, wobei die Zahl m = 4, die Zahl n = 4, der Multiplikand für die erste Multiplikationsschaltung = 0E, der Multiplikand für die zweite Multiplikationsschaltung = 0B der Multiplikand für die dritte Multiplikationsschaltung = 0D, und der Multiplikand für die vierte Multiplikationsschaltung = 09 ist.

8. Logische Schaltung nach Anspruch 6 oder Anspruch 7, wobei die vier Multiplikanden zwischen den Werten in Anspruch 6 und den Werten in Anspruch 7 schaltbar sind.

9. Logische Schaltung nach Anspruch 1, wobei die Steuermittel dazu vorgesehen sind, nacheinander als Eingang für jede der n Multiplikationsschaltungen jedes nachfolgende Element in der (1 x n) oder (m x 1) Matrix über jede von n oder m Operationszyklen vorzusehen.

10. Logische Schaltung nach Anspruch 1, wobei jede der n Multiplikationsschaltungen, jede der n logische Schaltungen und jedes der n Register wenigstens acht Bits breit sind.

11. Logische Schaltung nach Anspruch 1, wobei die Steuermittel weiterhin Mittel aufweisen um als Ausgang von der genannten logischen Schaltung den Inhalt der n Register nach jedem n. Zyklus zu schaffen.

12. Logische Schaltung nach Anspruch 1, wobei die Steuermittel weiterhin Mittel aufweisen zum Rückstellen jedes der Register vor der ersten Berechnungszyklus.

13. Logische Schaltung nach Anspruch 1, wobei jede aufeinander folgende Reihe m mit n Elementen eine vorbestimmte Reihenpermutation der unmittelbar vorhergehenden Reihe ist.

14. AES MixColumns Transformationsschaltung mit der logischen Schaltung nach einem der Ansprüche 1 bis 13.

15. AES Verschlüsselungs- und/oder Entschlüsselungsmaschine mit der logischen Schaltung nach einem der Ansprüche 1 bis 13 zum Durchführen der MixColumns Transformation.

## Revendications

1. Circuit logique pour la multiplication d'une matrice (m x n) par une matrice (1 x n) ou (m x 1), où m est un nombre de lignes et n est un nombre de colonnes, et dans lequel chaque ligne successive m, de n éléments, est une permutation de ligne prédéterminée d'une ligne précédente, le circuit étant **caractérisé en ce qu'**il comprend :
n circuits de multiplication (60...63), chacun comportant une entrée et une sortie qui renvoie la valeur de ladite entrée multipliée par un multiplicande prédéterminé;
n circuits logiques (70...73), chacun destiné à exécuter une combinaison logique prédéterminée d'une première entrée et d'une seconde entrée afin de fournir une sortie logique, la première entrée étant connectée à la sortie d'un circuit correspondant parmi les n circuits de multiplication;
n registres (80...83) destinés à recevoir ladite sortie logique;
une logique de rétroaction destinée à acheminer le contenu de chaque registre vers une entrée sélectionnée parmi les secondes entrées en fonction d'un plan de rétroaction qui correspond à la permutation de ligne prédéterminée, et
des moyens de commande destinés à fournir de manière successive, comme entrée à chacun des n circuits de multiplication, chaque élément dans la matrice (1 x n) ou (m x 1).

2. Circuit logique suivant la revendication 1, dans lequel la logique de rétroaction procure un plan de rétroaction correspondant à ladite permutation de ligne prédéterminée qui est un décalage de ligne.

3. Circuit logique suivant la revendication 2, dans lequel le décalage de ligne est un décalage vers la droite d'un seul élément.

4. Circuit logique suivant la revendication 1, dans lequel les n circuits logiques sont chacun aptes à exécuter une combinaison OU Exclusif de ladite première entrée et de ladite seconde entrée.

5. Circuit logique suivant la revendication 1, dans lequel chacun des multiplicandes prédéterminés correspond à un des éléments dans la fonction de transformation MixColumns Rijndael AES.

6. Circuit logique suivant la revendication 5, dans lequel le nombre m=4, le nombre n=4, le multiplicande pour le premier circuit de multiplication =02, le multiplicande pour le deuxième circuit de multiplication=03, le multiplicande pour le troisième circuit de multiplication =01, et le multiplicande pour le quatrième circuit de multiplication=01.

7. Circuit logique suivant la revendication 5, dans lequel le nombre m=4, le nombre n=4, le multiplicande pour le premier circuit de multiplication =0E, le multiplicande pour le deuxième circuit de multiplication=0B, le multiplicande pour le troisième circuit de multiplication=0D, et le multiplicande pour le quatrième circuit de multiplication=09.

8. Circuit logique suivant la revendication 6 ou la revendication 7, dans lequel les quatre multiplicandes peuvent commuter entre les valeurs de la revendication 6 et les valeurs de la revendication 7.

9. Circuit logique suivant la revendication 1, dans lequel les moyens de commande sont aptes à fournir de manière successive, comme entrée et à chacun des n circuits de multiplication, chaque élément successif dans la matrice (1 x n) ou (m x 1) sur chacun respectivement des n ou m cycles de fonctionnement.

10. Circuit logique suivant la revendication 1, dans lequel chacun des n circuits de multiplication, chacun des n circuits logiques, et chacun des n registres présentent une largeur d'au moins 8 bits.

11. Circuit logique suivant la revendication 1, dans lequel les moyens de commande comprennent en outre des moyens destinés à fournir, comme sortie dudit circuit logique, le contenu des n registres après chaque n^{ième} cycle.

12. Circuit logique suivant la revendication 1, dans lequel les moyens de commande comprennent en outre des moyens destinés à remettre à zéro chacun des registres avant le premier cycle de calcul.

13. Circuit logique suivant la revendication 1, dans lequel chaque ligne successive m de n éléments est une permutation de ligne prédéterminée de la ligne immédiatement précédente.

14. Circuit de transformation MixColumns AES intégrant le circuit logique suivant l'une quelconque des revendications 1 à 13.

15. Moteur de chiffrement et/ou de déchiffrement AES intégrant le circuit logique suivant l'une quelconque des revendications 1 à 13, et destiné à exécuter la transformation MixColumns.
